Europäisches Patentamt

European Patent Office

Office européen des brevets

(19)

(11) Publication number: **0 359 890 B1**

(12) # EUROPEAN PATENT SPECIFICATION

(45) Date of publication of patent specification: **02.12.92**   (51) Int. Cl.⁵: **B60N 2/02**

(21) Application number: **88830370.8**

(22) Date of filing: **14.09.88**

(54) **Folding chair arm for passenger transport vehicles.**

(43) Date of publication of application:
**28.03.90 Bulletin 90/13**

(45) Publication of the grant of the patent:
**02.12.92 Bulletin 92/49**

(84) Designated Contracting States:
**DE ES FR GB IT**

(56) References cited:
**EP-A- 0 278 651**
**CH-A- 272 207**
**US-A- 4 097 088**
**US-A- 4 496 190**

(73) Proprietor: **COSTRUZIONI MECCANICHE LEG-GERE di R. LAZZERINI & C. SpA**
**Via Toscana 1**
**Monsano (Ancona)(IT)**

(72) Inventor: **Spinsanti, Fabio**
**via Trieste**
**Moie di Maiolati (Ancona)(IT)**

(74) Representative: **Sassatelli, Franco T., Dr.**
**c/o INIP via Ruggi 5**
**I-40137 Bologna(IT)**

EP 0 359 890 B1

## Description

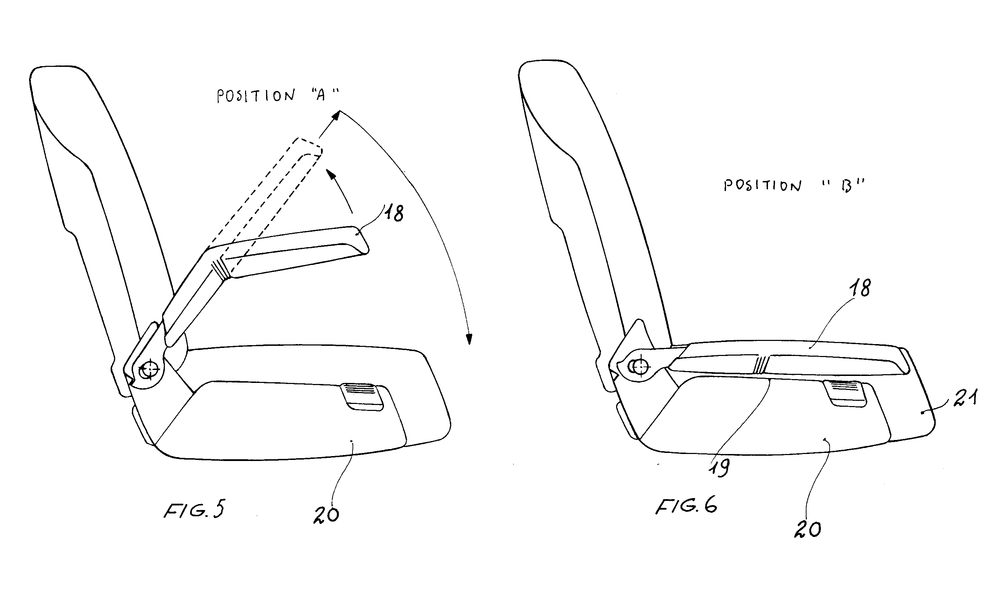

The invention refers to a carrier structure for the armrest of a chair made of two square drawpiece parts, jointed in vertical rotation, of which the initial part rises in slantwise to the seat backrest so to support the other part for allowing the passenger arm rest. The above indicated structure permits, by means of the second part raising which is moved in rectilinear standing of the initial part, to free side space part (fig. 5 - position "A") so to make easy the passanger motion for sitting down or standing up from the seat. Other characteristic consists to foresee said armrest carrier structure linked to the seat backrest on articulated joint with variable axle to permit during non-use its disposition sideways to the seating member (fig. 6 - position "B") so to completely free the space between the seating member and the moving passage of the vehicle. In the vehicles for transport of more passenger, like coaches and such, it is necessary to reconcile the seat comfort with the inside space saving. The multiplicity of the systems adopted as time passed in the prior art leads to believe as acquired to the current state technics to foresee the armrest facing the passage and hinged to a supporting lever to permit its shifting, with pressure or for traction, in lowering or in raising to make free the side space so to make easy the getting out and entrance motion of the passenger. Consequently the systems which foresee the armrest shifting, acting on a supporting lever which bears it on backrest, cannot itself set up a sound argument for granting a patent. With reference to the prior art it is known the U.S. Patent 4,097,088 which foresees an armrest supported on a lever with means pivotally connecting the ends of the armrest and of the lever and with hinge means to the other end of said lever adapted to mount same for swinging motion between first and second limiting positions. Said system moreover foresees locking means adapted to secure said supporting lever between the two positions and adapted to secure said armrest between an inoperative position and other operative. A second device, foreseen in U.S. Patent 4,496,190, employs a folding armrest where an actuating lever positioned in the armrest can be manually moved and said armrest can be lifted about a pivot pin to release a locking pawl slidably carried on one of the parallelogram links. In the first of said patents the armrest supporting in operative position is given by a strut structure while in the second patent system the supporting is given by a lever arm, vice versa in the present application system the armrest supporting is permitted by an angle supporting, by rotating link while said angle supporting is fixed on the backrest by means of a capturing with variable axis link. In comparison with said indicated systems the present system permits a general simplifying within a new invented idea and it permits two different solutions to bring in no-interference positions the armrest in the inoperative phase: a first position, forming the principal device solution, consists of lifting the armrest aligned with its supporting made of the initial part rises in slantwise from the seat backrest while a second position, subordinated to the previous one, consists of bringing the armrest aligned on the seating member by means of a different clutch on the backrest. Said solutions carry out by means of two square drawpiece parts start from the backrest hinged to a vertical link and keeping in position by means of knobs acting on clutch discs, form a new armrest characterized by component essentiality, a space saving and a cheap price manufacturing which permits the universality use.

The armrest carrier structure is formed by two square drawpiece parts 1 and 2 jointed in vertical rotation of which the initial part 1 rises in slantwise from the backrest upright and supports the second part 2 for the passenger arm rest. The said link permits to free the space directly alongside to the passage raising the second part 2, acting as armrest, which is brought aligned with the first part 1. Said movement is permitted by a couple of abutments 3 integrated with the second part 2 which rotate on the interposed bar 4 integrated with first part 1 and mounted to be pivotable on said abutments 3 by means of the linking shaft 5. To lock the second part 2 in the desired position it is foreseen the couple of knobs 6 which act on the couple of clutch discs 7 interposed between the linking members. The bar 4 is formed with oblique end 8 to permit itself two break positions on inside wall opposite parts of the second part 2. To reach the inoperative position, overcoming the braking effect given by the couple of clutch discs 7, it is raised the second part 2 to its upper movement limit determined by the beating effect of the below outline 9 of the bar 4 on the below part 10 of the inside wall of said second part 2. To reach the operative position, overcoming the braking effect, it is brought down, the second part 2 to its lower movement limit determined by the beating effect of the oblique end 8 of bar 4 on the upper part 11 of the inside wall of said part 2.

The armrest carrier structure, formed by the initial part 1 and the second part 2, is mounted on the backrest upright foreseen two different positions carring out by a variable axle link forming to the pivot 12 rises from the backrest upright 13 and which is positionable into the hole 14 foreseen on the plate 15 integrated with first part 1 with clasp put into effect by the pawl 16 foreseen on upright 13 which comes to beat on the base 17 of the plate 15. Drawing forward the armrest 18, formed bu the carrier structure with the two parts 1 and 2, for sliding of the pivot 12 into hole 14 is determined the unfastening of the base 17 of the plate 15 from the pawl 16. This permits to bring the armrest 18 in lowering so to place itself on the border 19 of the backrest lateral 20 of the seating member 21. In this way the armrest is put in a total no-interference position with the entry space passage.

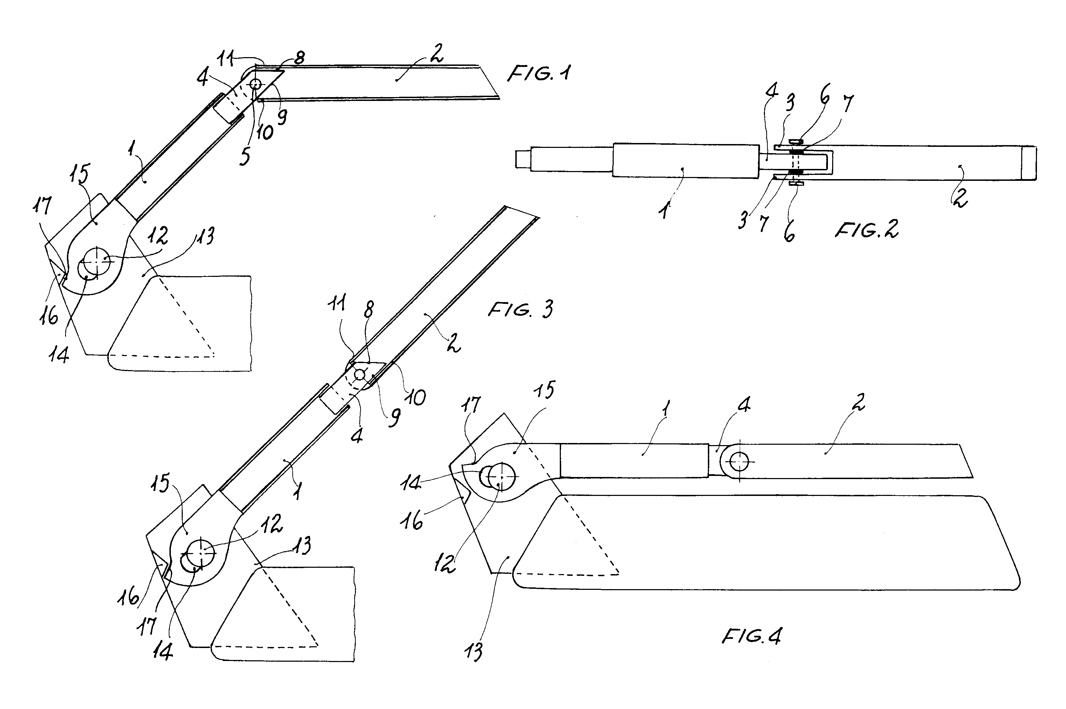

An embodiment of the present device is illustrated in the drawings of sheets 1 and 2. In sheet 1 fig. 1 is a longitudinal view of the armrest carrier structure in operative position and of the backrest upright. It is shown the plate 15 held in position by the pawl 16 of the backrest upright. This permits the slantwise upward disposition of the initial part 1 of the armrest carrier structure to bring, in angle disposition, the second part 2 of the same structure for the sitting passenger arm rest. Fig. 2 is a top view only of the armrest carrier structure with the two parts 1 and 2 aligned. Fig. 3 is view of the same members of fig. 1 with the armrest carrier structure with the parts 1 and 2 aligned. Fig. 4 is view of the armrest structure brought, after the unfastening of the plate 15 from the pawl 16 of the upright 13, in total lowering. In sheet 2 fig. 5 is side view of a seat with its armrest 18 in operative position while sketched it is the same armrest 18 shown when the part for the arm rest, formed by the second part 2 of the carrier structure, is aligned with the initial part 1 of the armrest carrier structure. Fig. 6 is view of the same seat of fig. 5 with the armrest 18 brought in lowering on the border 19 so to totally no-interfere with the entry space of the passage.

In the realization the linkage and stop means and also shapes and materials can be different foreseen.

## Claims

1. Folding chair arm for passenger transport vehicles consisting of an armrest carrier structure formed by two parts (1, 2) jointed in vertical rotation, the first part (1) rising slantwise from the backrest upright and supporting the second part (2), a linking shaft (5) being provided on which the second part (2) pivots, allowing the second part (2) to pivot between an operative position in which the second part (2) acts as arm rest and an inoperative position in which the second part (2) is in alignment with the first part (1), said positions being defined by a couple of abutments (3) integrated with the second part, characterized by the following: The two parts (1, 2) have a square profile and are linked through an interposed bar (4) which is integrated with the first part (1). To lock the second part (2) in a desired position a couple of knobs (6) are provided which acts on a couple of clutch discs (7) interposed between the pivoting parts (1, 4). The interposed bar (4) is formed with an oblique end (8) to permit two brake positions on parts of opposite inside walls of the second part (2). To reach the inoperative position, overcoming the braking effect given by the couple of clutch discs (7), the second part (2) is raised to its upper movement limited determined by the beating effect of the bottom outline (9) of the bar (4) on the starting part (10) of the lower inside wall of said second part (2). To reach the operative position, overcoming the braking effect, the second part (2) is brought down to its lower movement limit determined by the beating effect of the oblique end (8) of bar (4) on the starting part (11) of the upper inside wall of the second part (2).

2. Folding chair arm for passenger transport vehicles, as in claim 1, characterized by the fact that the lower end of the first part (1) is connected with a plate (15) which is linked to a pivot (12) extending from an upright (13) of the backrest. By drawing forward the armrest (18), formed by the carrier structure with the two parts (1, 2), its pivot (12) slides into a hole (14) which is provided in the plate (15), thereby releasing the base (17) of the plate (15) from the pawl (16) which is provided in the upright (13). This permits the armrest (18) to be lowered so as to place itself on the border (19) of the backrest lateral (20) of the seating member. In this way the armrest is put in a total no-interference position with the entry space passage.

## Patentansprüche

1. Ausschwenkbare Armlehne für Fahrgast Transportfahrzeuge die aus einem Tragwerk der Armlehne besteht, die ihrerseits aus zwei Halbteilen (1, 2) besteht; diese Halbteile sind mit einer senkrechten Umdrehung gegliedert und der erste Halbteil (1) hebt sich schräg von dem Ständer der Seitenwand und stützt den zweiten Halbteil (2), der einen einen Zapfen (5) vorsieht, auf dem sich der zweite Halbteil (2) dreht, wobei dieser Zapfen dem zweiten Halbteil (2) ermöglicht, zwischen einer Einsatzstellung, in der der zweite Halbteil eine Stütze für die Armlehne ist, und einem Ruhestand, wo der zweite Halbteil (2) mit dem ersten Halbteil (1) ausgerichtet ist, zu drehen, wobei diese Stellungen von einem Paar von Zapfen (3) bestimmt werden, die mit dem zweiten Halbteil verbunden sind; die zwei Halbteilen haben eine viereckige Außenlinie und werden durch eine dazwischengestellte Stange (4), die mit dem ersten Halbteil (1) verbunden ist, gedreht. Ein Paar von Kugelgriffen (6), die auf das Paar von den zwischen den Gelenkteilen (1, 4) gestellten Kupplungsscheiben (7) wirken, sind vorgesehen, um den zweiten Halbteil (2) in der gewünschten Stellung zu blocken. Die eingeführte Stange (4) entspricht einem schrägen Endverschluß (8), um zwei Sperrungsstellungen auf den gegenüberliegenden Innenflächen des zweiten Halbteiles (2) zu haben. Um den Ruhestand zu erreichten, nachdem die Zurückhaltung der beiden Kupplungsscheiben (7) überwunden worden ist, der zweite Halbteil (2) wird bis zum Ende seiner Oberfahrt gehoben, die von der schlagenden Wirking des Unterrandes (9) der Stange (4) auf den ersten Teil (10) des Unterinnenteiles des Halbteiles (2) bestimmt wird. Um den Einsatzstellung zu erreichen, nachdem die Zurückhaltung der beiden Kupplungsscheiben überwunden worden ist, der zweite Halbteil (2) wird bis zum Ende seiner Unterfahrt gehoben, die von der schlagenden Wirkung des schrägen Endverschluß (8) der Stange (4) auf den ersten Teil (11) des Oberinnenteiles des Halbteiles (2) bestimmt wird.

2. Ausschwenkbare Armlehne für Fahrgast Transportfahrzeuge, gemäß des Anspruches 1), ist dadurch gekennzeichnet, daß der Unterendverschluß der ersten Halbteiles (1) mit einer Platte (15) verbunden ist, die mit einem sich vom Stander (13) erhebenden Zapfen (12) gegliedert ist. Wobei man die Armlehne (18), die aus den zwei Halbteilen (1, 2) besteht, vorzieht, gleitet der Zapfen (12) in der Oese (14) die auf der Platte (15) vorgesehen ist und freiet dadurch die Unterlage (17) der Platte (15) vom Zahn (16) des Standers (13). Dadurch ist es möglich, die Armlehne (18) herunterzulassen und ihn auf den Rand (19) des Sesselseitenwand (20) zu stellen. Auf diese Weise hat die Armlehne keine möglichkeit, sich in den Zugangsraum einzuschalten.

**Revendications**

1. Accoudoir pliable pour véhicules de transport en commun constitué d'une structure qui supporte l'accoudoir, et qui comporte deux éléments (1, 2) assemblés en rotation verticale, le premier élément (1) en se soulevant obliquement du dossier droit et en supportant les pivots du second élément (2), puisque il existe un arbre de liaison (5) sur lequel le second élément (2) s'articule, en permettant au second élément de tourner entre la position travail,

dans laquelle le second élément (2) fonctionne comme accoudoir, et une position repos dans laquelle le secondo élément (2) s'aligne exactement avec le premier élément (1); les dites positions sont définies par une paire d'aboutements (3) qui sont intégrés avec le second élément et qui sont caractérisés par se qui suit: les deux élément (1, 2) ont un profil carré et sont enclenchés par le moyen d'une barre interposée (4), qui à son tour est integrée avec le premier élément (1); pour bloquer le second élément (2) dans la position voulue, il existe un couple de boutons (6), qui agissent sur deux disques d'embrayage (7), ce couple de boutons étant interposé entre les parties pivotantes (1, 4); la barre interposée (4) est constituée de une extrémité oblique (8), afin de permettre deux positions de freinage sur les parties des parois intérieures opposées du second élément (2); pour atteindre la position repos en supérant l'effet de freinage causé par les deux disques d'embrayage (7), le second élément (2) est soulevé vers sa position supérieure limitée, et qui est determinée par l'effet de battement du tracé inférieur (9) de la barre (4) sur le point de demarrage (10) de la paroi intérieure inférieure du dit second élément (2); afin d'atteindre la position travail, en supérant l'effect de freinage, le second élément (2) est baissé à sa limit de mouvement inférieure déterminée par l'effect de battement de l'extrémité oblique (8) de la barre (4) sur le point de démarrage (11) de la paroi supérieure intérieure du second élément (2).

2. Accoudoir pliable pour véhicules de transport en commun, comme à la revendication 1), caractérisé par le trait que l'extrémité inférieure du premier élément (1) est branchée à une plaque (15) qui est liée à un pivot (12) s'extendant d'un bout (13) du dossier; en enlevant le dossier (18), formè par la structure portante avec le deux éléments (1, 2) son pivot (12) glisse dans un trou (14), qui est percé dans la plaque (15); de cette façon il dégage la base (17) de la plaque (15) du cliquet (16), qui est placé sur la partie supérieure (13); ce mouvement permet la descente de l'accoudoir (18), qui peut ce placer sur le rebord (19) de l'accoudoir latéral (20) de l'élément du siége; de cette façon l'accoudoir est fixé dans une position qui n'interfére absolument avec le passage donnant accés au siége.

FIG.1

FIG.2

FIG. 3

FIG.4

EP 0 359 890 B1

POSITION "A"

18

FIG. 5

20

POSITION "B"

18

21

19

FIG. 6

20

EP 0 359 890 B1

6